# EUROPEAN PATENT SPECIFICATION

(11) **EP 1 153 672 B1**
(45) Date of publication and mention of the grant of the patent: **28.07.2004**
(21) Application number: 00109802.9
(22) Date of filing: 09.05.2000
(51) Int. Cl.: B21C 37/09, B23K 20/04

(54) **Cald steel pipe**
Plattiertes Stahlrohr
Tube en acier plaqué

(43) Date of publication of application: 14.11.2001
(73) Proprietor: THE JAPAN STEEL WORKS, LTD., Tokyo100 (JP)
(72) Inventor: Sakuraba, Masahiro, Muroran, Hokkaido (JP); Taguchi, Masahiko, 1-chome, Chiyoda-ku, Tokyo (JP); Saitoh, Yasunobu, Muroran, Hokkaido (JP)
(74) Representative: Grünecker, Kinkeldey, Stockmair & Schwanhäusser Anwaltssozietät

(56) References cited:
- BE-A- 341 886
- GB-A- 384 177
- DATABASE WPI Section Ch, Week 8932, 20 September 1989 (1989-09-20) Derwent Publications Ltd., London, GB; Class M21, AN 89-232793 XP002149291 & SU 1 346 377 A (PIPE IND RES INST), 20 September 1989 (1989-09-20)

## Description

The invention relates to a clad steel pipe which is furnished with a clad material comprising a corrosion resistant material on an internal surface or an external surface of a steel pipe as a base material, and more particularly to a structure for reducing the amount of using the clad material.

### Related art

In general, a steel pipe has a property excellent in strength but a demerit poor in corrosion resistance. Therefore, the steel pipe is dealt with a measure of corrosion resistance in view of using environments and others, and then used. In particular when a high corrosion resistance is demanded, a solid pipe made of a corrosion resistant material such as a stainless steel is served instead of steel pipes.

However, the solid pipe made of the corrosion resistant material is expensive in itself and inferior in strength comparing with a steel pipe. For securing the strength of the solid pipe, the amount of employing materials should be increased, but resulting to be very expensive.

Accordingly, as a high corrosion resistant steel pipe for solving those problems, such a clad steel pipe has been developed and broadly used, which is furnished with a clad material comprising the corrosion resistant material on an internal surface or an external surface of the steel pipe which is the base material.

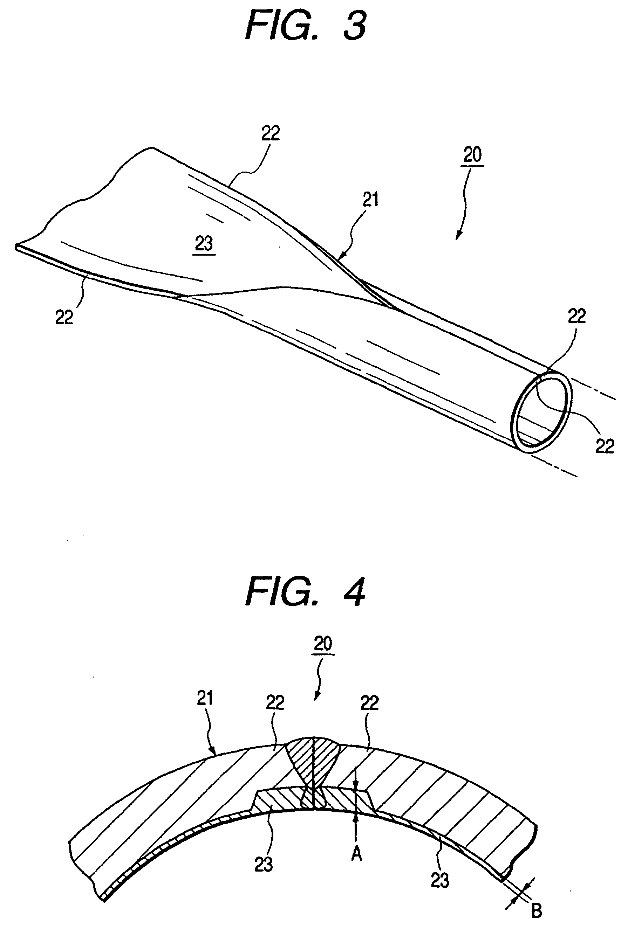

Referring to Figs. 3 and 4, conventionally, JP-A-58-154488 sets forth a method of curving the clad steel plate or the clad steel band 21 in a width direction to shape a pipe, for example, as shown in Fig. 3, and welding both edges 22 to be a seam part in a width direction of the clad steel plate or the clad steel band 21, thereby to manufacture a clad steel pipe 20.

In the clad steel plate or band 21, as shown in Fig. 4, the height of a base plate of both edges 22 to be the seam part in the width direction is formed to be thinner than other parts of both edges 22, and at the same time a clad material 23 to be covered by both ends 22 is formed to be thicker than the clad material 23 other than both edges 22 in the width direction, and as a whole, a uniform thickness is provided.

In the conventional clad steel pipe 20 as shown in Figs. 3 and 4, the thickness A (Fig. 4) of the clad material 23 of both edges 22 to be the seam part in the width direction of the clad steel plate or band 21 is larger than the thickness B (Fig. 4) of the clad material 23 other than both edges 22. Thereby, such an arrangement absorbs a discrepancy caused at welding both edges 22 in the width direction of the clad steel plate or band
when manufacturing the clad steel pipe 20 (hereafter called as "discrepancy at the welded part when manufacturing the clad steel pipe 20").

It is accordingly possible to prevent the corrosion resistance from deterioration caused by the discrepancy at both edges of the clad material 23 in the seam part of the clad steel plate or band 21.

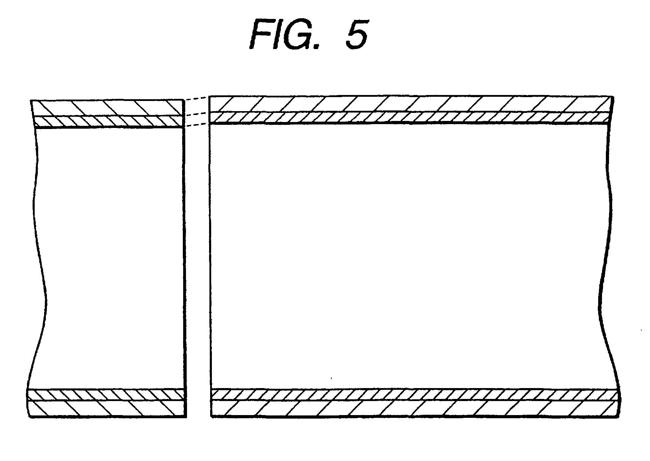

However, on the other hand, any consideration is not paid at all to absorption of a discrepancy caused when welding the clad steel pipes each other in a construction field of laying clad steel pipes, that is, such a discrepancy as shown with dotted lines in Fig. 5 caused by dimensional tolerance or out of roundness (hereafter called as "discrepancy at the welded part when laying the clad steel pipes 20").

For absorbing the discrepancy at the welded part when executing works of the clad steel pipes, the thickness of the clad material at both ends in the length direction of the clad steel pipe must be determined to be large values having a margin for the amount of an expected discrepancy.

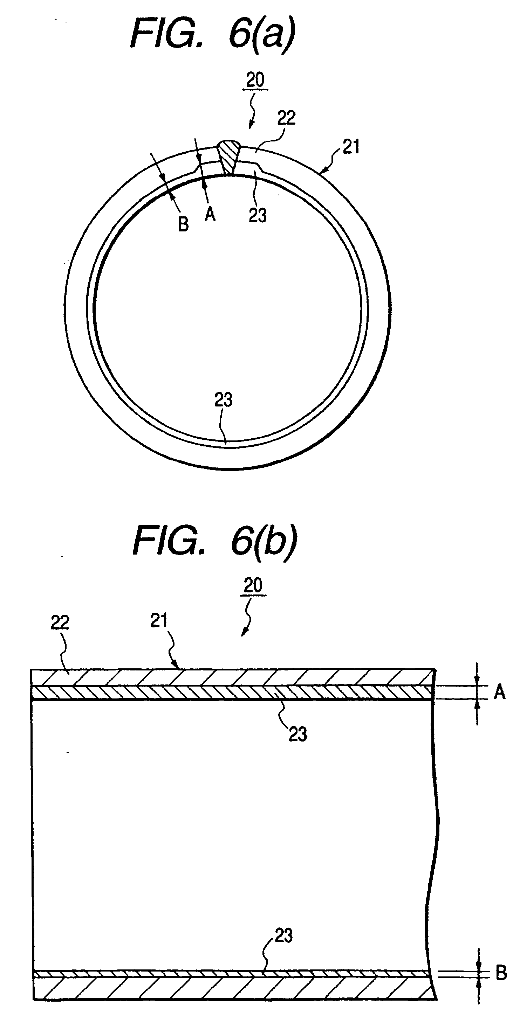

Considering this fact by applying to the conventional clad steel pipe 20, since the thickness of the clad material 23 is, as shown in Figs. 6A and 6B, uniform in the length direction of the clad steel pipe 20, the thickness B of the clad material 23 other than both edges 22 in the width direction to be a seam part of the clad steel plate or band 21 must be determined to be a value which can absorbs the discrepancy in the welded part when executing to lay the clad steel pipe 20.

In short, in the conventional clad steel pipe 20, an attention is given only to the absorption of the discrepancy at the welded part when manufacturing the clad steel pipe 20, while an ignorance is done to the absorption of the discrepancy at the welded part when laying the clad steel pipe 20. If the clad material 23 has a large thickness (defined by a thickness A) in both edges 22 to be the seam part of the clad steel plate or band 21, it is possible to suppress the amount of using the expensive clad material 23.

But in view of the actual execution that many clad steel pipes 20 are connected one another by welding in the laying construction field in the length direction over several kilometers to several tens kilometers in total extension, the discrepancy at the welded part when laying the clad steel pipe 20 must be by all means absorbed.

In addition, in the welding works in the laying field where an equipment and a working circumstance are largely restrained, the discrepancy at the welded part when laying the clad steel pipe 20 should be also absorbed for selecting a suitable welding method to effect highly working efficiency.

Therefore, in the structure of the conventional clad steel pipe 20, the thickness B of the clad material 23 other than both edges in the width direction to be the seam part of the clad steel plate or band 21 is determined to be the value which can absorb the discrepancy at the welded part when laying the clad steel pipe 20, and the thickness A of the clad material 23 of both edges in the width of the clad steel plate or band 21 is determined to be larger than the thickness B.

Such a situation does not reduce the amount of using the expensive clad materials 23 but increases it in proportion to the difference between the thickness A and the thickness B. Besides, since the thickness A and the thickness B of the clad materials 23 are uniform in the length direction of the clad steel pipe 20 as shown in Fig. 6B, the amount of using the clad materials 23 may be probably heightened several ten times or several hundred times depending on he laying distance, resulting to invite tremendous increase of cost.

Seeing the clad steel pipe 20 with respect to the corrosion resistance, a margin for corrosion is not necessary when clad material is correctly selected and sizes of the clad material 23 give no influence to the corrosion resistance.

Therefore, in spite of only both edges 22 to be the seam part in the width direction of the clad steel plate or band 21 as the conventional clad steel pipe 20, the forming of the clad material 23 to be thick denotes a very ineffective using of many clad materials 23 which make no contribution to the corrosion resistance, and gives impetus to cost increasing.

### SUMMARY OF INVENTION

It is an object of the invention to offer a clad steel pipe which can exactly absorb the discrepancy when welding clad steel pipes each other in the laying field thereof, and though securing high corrosion resistibility, can decrease the amount of using expensive clad materials as the laying distance becomes longer, and can save cost.

The object of the invention can be accomplished by a clad steel pipe with the features of claim 1.

In the clad steel pipe according to the invention, in a manner that the thickness of the clad materials at both ends in the length direction is set to be a predetermined value which enables to absorb the discrepancy when connecting the instant clad steel pipe with another clad steel pipe each other, the discrepancy with the other clad steel pipe is exactly absorbed,
for example, when connecting the clad steel pipes in the actual laying field.

That is, even if the discrepancy caused by such as dimensional tolerance or out of roundness exist more or less at the connecting part of the clad material of each clad steel pipe, it is absorbed by the thickness of both ends in the length direction of the clad material of each clad steel pipe. Thus, the steel pipe which is the base material is not exposed to a substance flowing in the clad steel pipe.

In the manner that the thickness of the clad material at the parts other than both ends in the length direction is set to be the value smaller than the predetermined value, the longer is the clad steel pipe in the length direction, the less is the amount of using the corrosion resistant material which is the material to be the clad material. Accordingly, the amount of using the expensive clad materials is decreased as the laying distance of the clad steel pipe becomes longer.

### BRIEF DESCRIPTION OF DRAWINGS

Figs. 1(a) and (b) are views showing one embodied clad steel pipe of the invention;
Fig. 2 is an elementary cross sectional view along the length direction, showing that two pieces of the clad steel pipes of Fig. 1 are connected;
Fig. 3 is a perspective view showing a condition on the way of forming a conventional clad steel pipe from a clad steel band;
Fig. 4 is an elementary cross sectional view along the length direction and the transverse direction, showing a welded part during manufacturing the conventional clad steel pipe;
Fig. 5 is an elementary cross sectional view showing the condition of connecting two pieces of the conventional clad steel pipes; and
Fig. 6 are (a) and (b) are views showing the conventional clad steel pipe.

### DETAILED DESCRIPTION OF PREFERRED EMBODIMENTS

The invention will be explained by way of the shown embodiments.

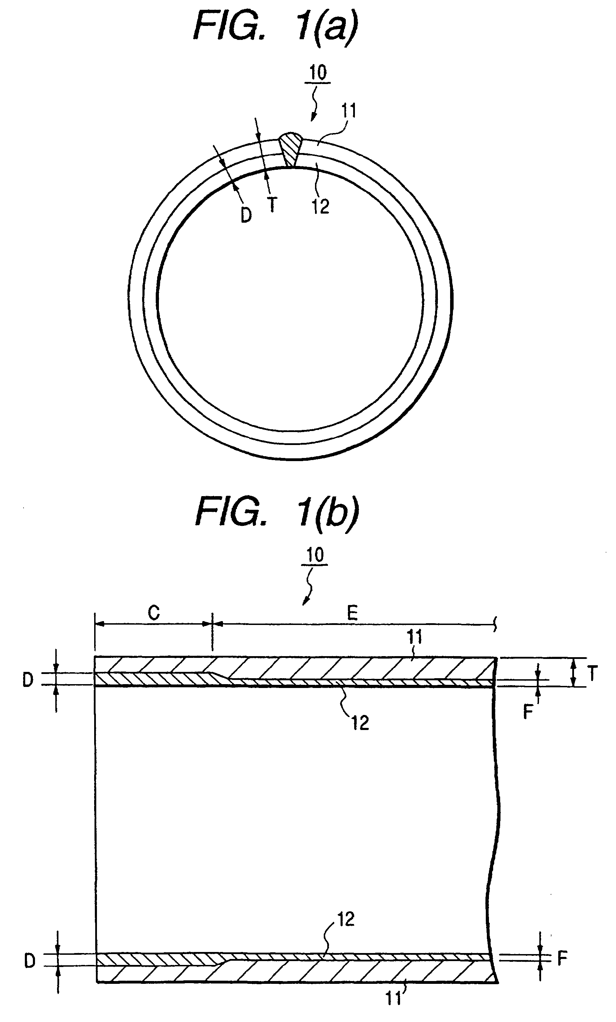

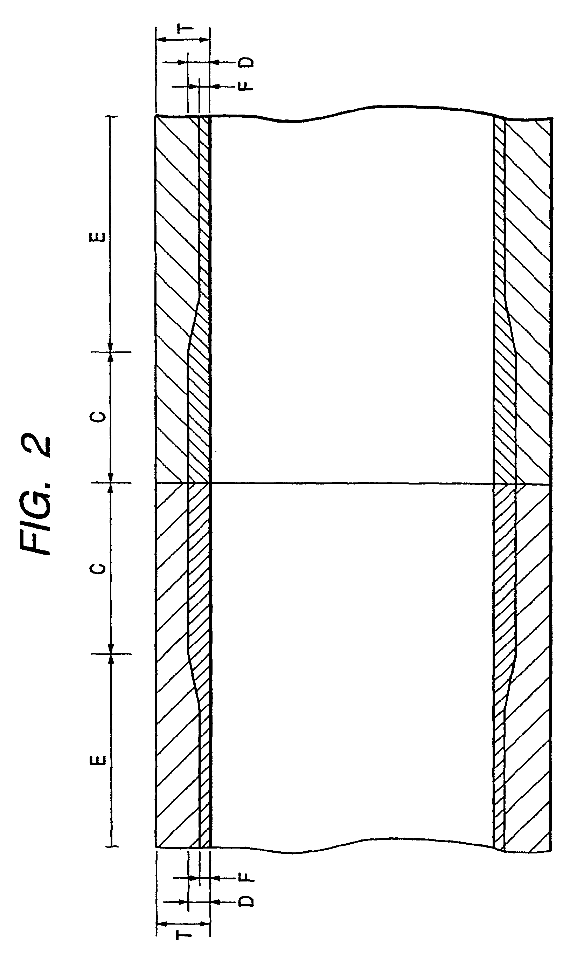

Fig. 1 is a view showing one mode of the clad steel pipe of the invention, and Fig. 1A is a side view seen from the length direction, and Fig. 1B is a cross sectional view along the length direction. Fig. 2 is an elementary cross sectional view along the length direction, showing that two pieces of the clad steel pipes of Fig. 1 are connected.

In these figures, the clad steel pipe 10 is realized by furnishing the clad material 12 comprising the corrosion resistant material such as stainless steel on the internal circumference of the base material 11. The total T of the thickness of the base material 11 and the thickness of the clad material 12 is equal over the full length of the clad steel pipe 10 (dimension in the length direction), and the clad steel pipe 10 has the thickness T uniform within the prescribed tolerance over the full length.

The clad material 12 is determined with respect to the thickness at both ends C in the length direction of the clad steel pipe 10 (the right and left directions in Fig. 1B and Fig. 2), that is, the thickness at both ends in the length direction to be welded parts when welding laid clad steel pipes 10 in the construction field, so that the thickness has the value D enabling to absorb the discrepancy with other clad steel pipe 10 when welding the laid clad steel pipe 10. The clad material 12 is further determined with respect to the thickness of the part E other than both ends C, so that the thickness has the value F smaller than the predetermined value D.

Still further reference will be made to the work of the practiced embodiment.

When welding the clad steel pipes 10 in the laying construction field, if the thickness of the clad material 12 at both ends C of the clad steel pipe in the length direction is of the predetermined value D, the discrepancy between the clad steel pipes is exactly absorbed.

That is, if the discrepancy caused by dimensional tolerance or out of roughness in each clad steel pipe 10 exist more or less at the welded part of the clad material 12 of each clad steel pipe 10, it is absorbed by the thickness D of the clad material of each clad steel pipe, and the base material is not exposed to a substance passing in the clad steel pipe.

In the manner that the thickness of the clad materials 12 at the parts E other than both ends C in the length direction of the clad steel pipe 10 is set to be the value F smaller than the predetermined value D, the longer is the clad steel pipe 10 in the length direction, the less is the amount of using the corrosion resistant material which is a material of the clad material 12. Accordingly, the amount of using the expensive clad materials is decreased as the laying distance of the clad steel pipe 10 becomes longer.

According to the above practicing mode, by setting the thickness of the clad material 12 at both ends C in the length direction of the clad steel pipes 10 to be the predetermined value D, it is possible to exactly absorb the discrepancy when welding the clad steel pipes 10 in the actual construction field of laying the clad steel pipes 10 and secure the high corrosion resistance. Besides, by setting the thickness of the clad material 12 at the parts E other than both ends C in the length direction to be the value F smaller than the predetermined value D, it is possible to give no bad influence to the corrosion resistance, decrease the amount of using the expensive clad material 12 and very effectively use the clad material 12. Thereby, the more extended is the laying distance of the clad steel pipe 10, the larger cost saving effect can be obtained.

Seeing the clad steel pipe 10 with respect to the corrosion resistance, the margin for corrosion is not necessary to the clad material 12 comprising the correctly selected corrosion resistant material, and sizes of the thickness of the clad material 23 give no influence to the corrosion resistance. Therefore, by exactly absorbing the discrepancy at the welded parts when laying the clad steel pipes 10, it is possible to secure the high corrosion resistance while largely curtailing the amount of the clad material 12 which makes no contribution to the corrosion resistance.

Considering the actually using mode of the clad steel pipe 10, namely the using mode that many clad steel pipes 10 are connected one another by welding them in the laying construction field in the length direction over, for example, several kilometers to several tens kilometers in total extension, it is possible to decrease the amount of using the expensive clad material 12 as the laying distance of the clad steel pipe 10 is elongated. The cost saving effect of the clad steel pipe 10 of the practicing mode is made larger in proportion to the laying distance of the clad steel pipe 10.

In the welding work in the laying construction field where the equipment, the working circumstance are largely restrained, it is possible to select the suited welding method and attempt to improve the working efficiency.

According to the invention, the thickness of the clad material at both ends of the clad steel pipe in the length direction is set to be the predetermined value which enables to absorb the discrepancy when connecting with another clad steel pipe each other, and at the same time the thickness of the clad material at the parts other than both ends in the length direction of the clad steel pipe is set to be the value smaller than the predetermined value.

It is possible to exactly absorb the discrepancy when welding clad steel pipes each other in the laying field thereof, and though securing high corrosion resistibility, decrease the amount of using the expensive clad material as the laying distance becomes longer and save the cost.

## Claims

1. A clad steel pipe (10) comprising:
a clad material (12) comprising a corrosion resistant material on the internal surface and/or external surface of a base material (11), **characterized in that** the thickness at both ends of the clad material (12) in a length direction is determined to be fixed to a value which enables to absorb a discrepancy when connecting the clad steel pipe (10) to another clad steel pipe, while the thickness of the clad material (12) at other parts than at said both ends is determined to be at a value which is smaller than said fixed value at both ends.

## Patentansprüche

1. Rohr (10) aus plattiertem Stahl, das umfasst:
ein plattiertes Material (12), das ein korrosionsbeständiges Material an der Innenfläche und/oder der Außenfläche eines Grundmaterials (11) umfasst, **dadurch gekennzeichnet, dass** die Dicke des plattierten Materials (12) an beiden Enden in einer Längsrichtung so bestimmt wird, dass sie auf einen Wert festgelegt ist, der es ermöglicht, eine Abweichung beim Verbinden des plattierten Stahlrohrs (10) mit einem anderen plattierten Stahlrohr auszugleichen, während die Dicke des plattierten Materials (12) an anderen Teilen außer an den beiden Enden so bestimmt wird, dass sie einen Wert hat, der kleiner ist als der festgelegte Wert an beiden Enden.

## Revendications

1. Tube d'acier plaqué (10), comprenant :
un matériau de placage (12) comprenant un matériau résistant à la corrosion, à la surface interne et/ou la surface externe d'un matériau de base (11), **caractérisé en ce que** l'épaisseur aux deux extrémités du matériau de placage (12) dans la direction de la longueur est déterminée afin qu'elle soit fixée à une valeur qui permet l'absorption de la différence lors du raccordement du tube d'acier plaqué (10) à un autre tube d'acier plaqué, l'épaisseur du matériau de placage (12) dans les parties autres que les deux extrémités étant déterminée afin qu'elle prenne une valeur inférieure à la valeur fixée aux deux extrémités.
